# EUROPEAN PATENT APPLICATION

(11) **EP 1 460 867 A1**
(43) Date of publication of application: **22.09.2004**
(21) Application number: 04006385.1
(22) Date of filing: 17.03.2004
(51) Int. Cl.: H04Q 7/22, G06F 17/60, H04M 1/725

(54) **Method of automatically replying to e-mail and mobile terminal for doing the same**

(30) Priority: 17.03.2003 JP 2003071607
(71) Applicant: NEC CORPORATION, Tokyo (JP)
(72) Inventor: Nishimura, Tomotsune, c/o NEC Corp., Tokyo (JP)
(74) Representative: VOSSIUS & PARTNER

(57) **Abstract**

The method of automatically replying to a received e-mail in a mobile terminal having a function of transmitting and receiving an e-mail, includes the step of automatically transmitting image data determined in accordance with an address of a transmitter of the received e-mail, to the address.

## Description

The invention relates to a method of automatically replying to a received e-mail in a mobile terminal having a function of transmitting/receiving an e-mail, a mobile terminal having functions of transmitting/receiving an e-mail and automatically replying to a received e-mail, and a program for causing a computer to carry out a method of automatically replying to a received e-mail in a mobile terminal having a function of transmitting/receiving an e-mail.

In voice or e-mail communication through mobile terminals, a transmitter usually expects a receiver to make a prompt response. Hence, if a receiver cannot make a prompt response for some reasons, it is preferable to make a response to a transmitter by any means. In particular, it would be possible in a business scene to avoid a client from unnecessarily waiting a response by informing the client that communication will be made to him/her at a certain time.

For instance, Japanese Patent Application Publication No. 2001-337899 has suggested a method of automatically replying to a received e-mail which method makes it possible to make a response at real-time without waiting an e-mail transmitter, even if an e-mail receiver cannot transmit an e-mail as a response. In the suggested method, a plurality of character data to be displayed in a display screen is stored in a memory, and a character unique to an e-mail transmitter is transmitted for readily identifying a transmitter.

However, the suggested method is accompanied with the following problems.

The first problem is that since only characters and letters are used for making a response, a circumstance of an e-mail receiver is informed to an e-mail transmitter only in characters and letters. This means that visibility is poor.

The second problem is that since characters are determined by a manufacturer and stored in a mobile terminal before the mobile terminal is shipped, a user cannot edit, amend and revise such characters.

In view of the above-mentioned problems in the prior art, it is an object of the present invention to provide a method of automatically replying to a received e-mail in a mobile terminal having a function of transmitting/receiving an e-mail, which method ensures much visibility to a user and makes it possible for a user to edit a response e-mail.

It is also an object of the present invention to provide a mobile terminal having functions of transmitting/receiving an e-mail and automatically replying to a received e-mail, which mobile terminal can do the same.

It is further an object of the present invention to provide a program for causing a computer to carry out the above-mentioned method in a mobile terminal having a function of transmitting/receiving an e-mail.

In accordance with the present invention, image data is automatically transmitted to an e-mail transmitter in response to a received e-mail. A mobile terminal is recently designed to have a camera, ensuring that a user can readily obtain and edit image data. In addition, infrastructure is being built for ensuring much-volume data communication such as high-rate communication of image data, because of commencement of commercially available service of a third-generation cellular phone. In such a circumstance, transmission of image data through a mobile terminal will be facilitated.

In accordance with the present invention, when a user receives an e-mail through his/her mobile terminal having a function of transmitting and receiving an e-mail, image data stored in the mobile terminal is automatically transmitted to a predetermined mail address, even if the user is in a condition that he/she cannot make a response to the received e-mail. Since image data is transmitted to an opposite party, he/she can soon realize which condition the e-mail receiver is in.

Specifically, the present invention provides, in one aspect, a method of automatically replying to a received e-mail in a mobile terminal having a function of transmitting and receiving an e-mail, characterized by the step of automatically transmitting image data determined in accordance with an address of a transmitter of the received e-mail, to the address.

In another aspect of the present invention, there is provided a mobile terminal having functions of transmitting and receiving an e-mail, and automatically replying to a received e-mail, characterized by a controller for automatically transmitting image data determined in accordance with an address of a transmitter of the received e-mail.

In still another aspect of the present invention, there is provided a program for causing a computer to carry out a method of automatically replying to a received e-mail in a mobile terminal having a function of transmitting and receiving an e-mail, wherein steps executed by the computer in accordance with the program include automatically transmitting image data determined in accordance with an address of a transmitter of the received e-mail, to the address.

The advantages obtained by the aforementioned present invention will be described hereinbelow.

The first advantage is that since image data is transmitted to an e-mail transmitter in response, he/she can readily realize a condition in which an e-mail receiver is, due to the received image data.

The second advantage is that since a response e-mail is automatically transmitted to an e-mail transmitter when a user cannot make a prompt response, an e-mail transmitter can immediately receive a response from an e-mail receiver.

The third advantage is that since a user can edit image data, he/she can transmit appropriate data matching to a condition in which he/she is.

The fourth advantage is that since a user can determine, for each of addresses of e-mail transmitters, whether image data should be automatically transmitted in response to a received e-mail, the user can have enhanced serviceability.

### BRIEF DESCRIPTION OF THE DRAWINGS

FIGs. 1 and 2 are perspective views of a cellular phone to which a mobile terminal in accordance with the present invention is applied.
FIG. 3 is a block diagram of the cellular phone illustrated in FIGs. 1 and 2.
FIG. 4 is a partial block diagram of the cellular phone illustrated in FIGs. 1 and 2.
FIG. 5 is a flow-chart showing an operation of the cellular phone illustrated in FIGs. 1 and 2.

### DESCRIPTION OF THE PREFERRED EMBODIMENT

In an embodiment explained hereinbelow, a mobile terminal in accordance with the present invention is applied to a cellular phone.

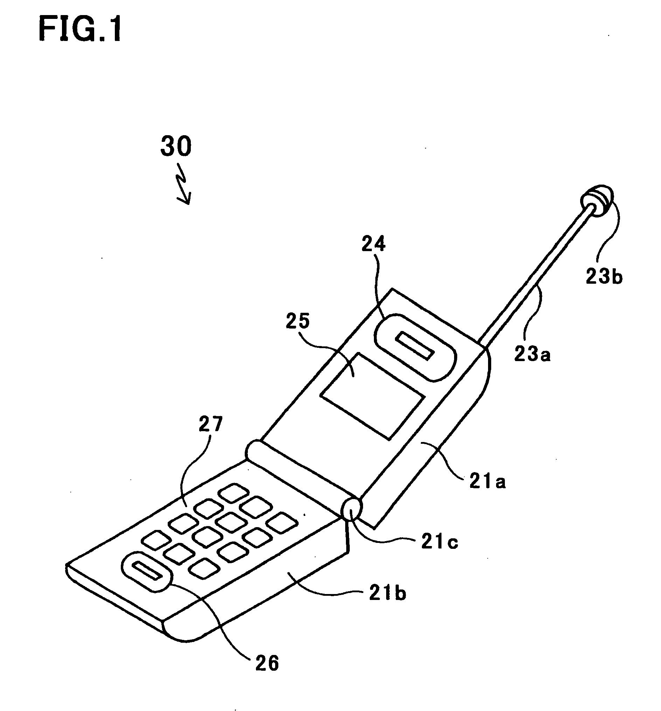

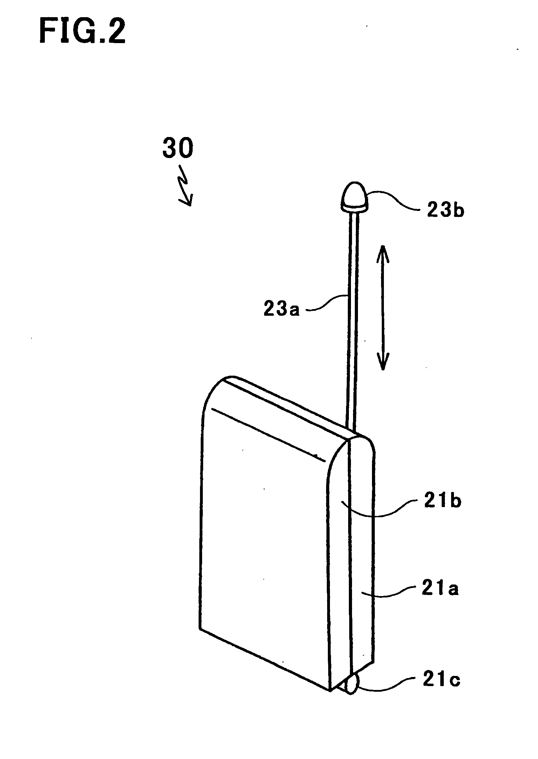

FIGs. 1 and 2 are perspective views of a cellular phone 30 to which a mobile terminal in accordance with the present invention is applied. As illustrated in FIGs. 1 and 2, the cellular phone 30 is a foldable one.

The cellular phone 30 is comprised of an upper half 21a, a lower half 21b, a hinge 21c around which the upper and lower halves 21a and 21b are swingable to each other, an antenna 23a, and a helical antenna 23b mounted at a top of the antenna 23a.

The antenna 23a is extendible from the upper half 21a and contractible into the upper half 21a.

The upper half 21a includes a speaker 24 and a display screen 25. The lower half 21b includes a microphone 26 and numeral keys 27.

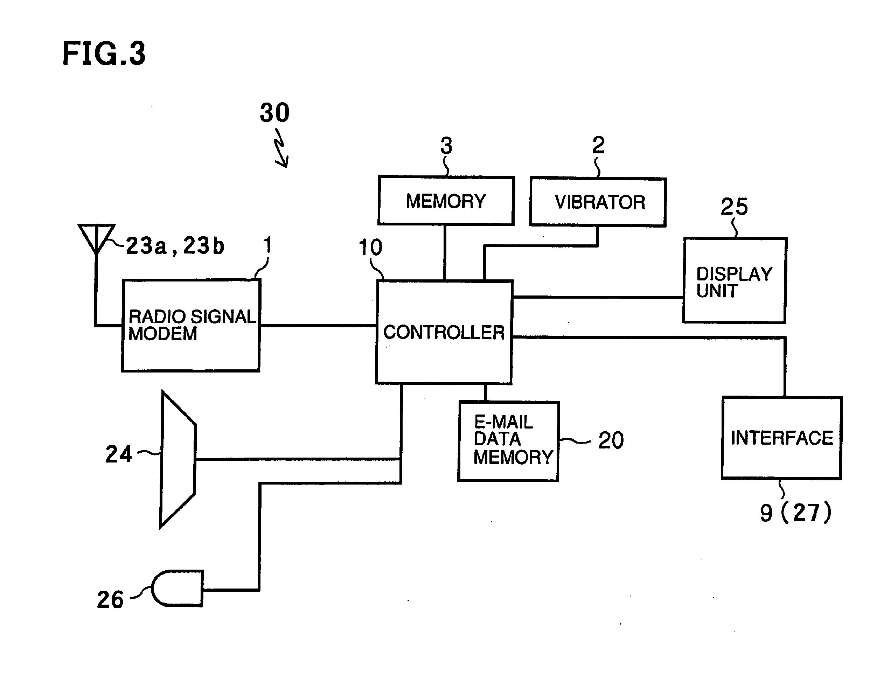

The upper and lower halves 21a and 21b are rotatable around the hinge 21c. Hence, the cellular phone 30 can be folded, as illustrated in FIG. 3, wherein the upper and lower halves 21a and 21b overlap each other. When the cellular phone 30 is not folded, as illustrated in FIG. 2, the upper and lower halves 21a and 21b make an angle of about 180 degrees.

FIG. 3 is a block diagram of the cellular phone 30.

The cellular phone 30 is comprised of an antenna 23a through which a radio signal is received and transmitted, a radio signal modem 1 which modulates a radio signal to be transmitted therefrom and demodulates a received radio signal, a controller 10 comprised of LSI and receiving demodulated radio signals from the radio signal modem 1, a memory 3 storing data and a program therein, an e-mail data memory 20, a speaker 24, a microphone 26 which collects voices of a user, a display unit 25 which displays various data such as a content of a received e-mail, an interface 9 comprised of the numeral keys 27 through which a user inputs data into the controller 10, and a vibrator 2 which vibrates a body of the cellular phone 30.

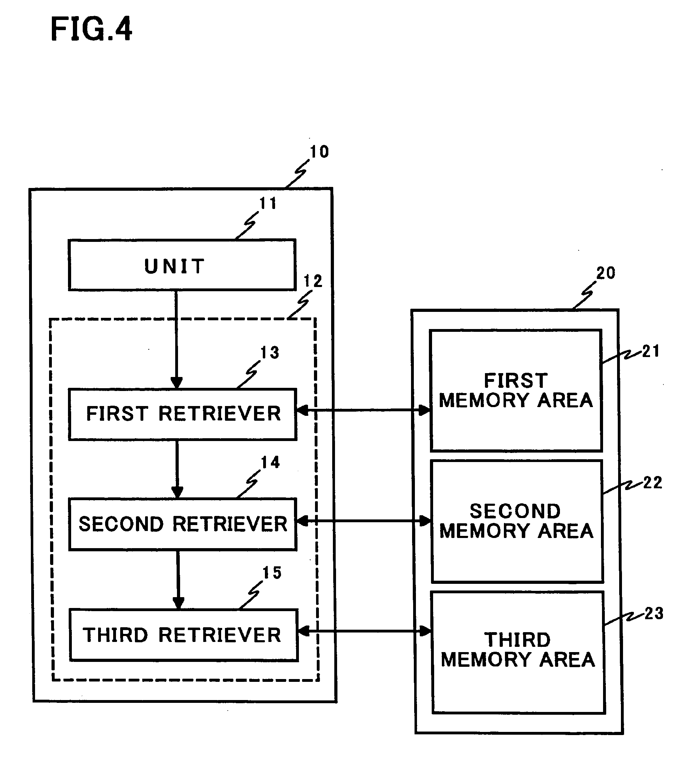

FIG. 4 is an enlarged block diagram of the controller 10 and the e-mail data memory 20.

The e-mail data memory 20 includes a first memory area 21, a second memory area 22, and a third memory area 23.

The first memory area 21 stores addresses to which image data is to be automatically transmitted. A user can input such addresses into the first memory area 21 through the numeral keys 27, or can select one of the addresses through an address list.

The second memory area 22 stores messages or sentences to be mailed which a user can edit for each of the addresses stored in the first memory area 21. Herein, the messages or sentences are comprised only of text data.

The third memory area 23 stores moving-image data which a user can edit for each of the addresses stored in the first memory area 21.

The controller 10 includes a unit 11 and a data processor 12.

In the unit 11 is stored whether a reply is automatically transmitted to an e-mail transmitter in response to a received e-mail. The unit 11 may be designed to co-work with a clock (not illustrated) housed in the cellular phone 30 to start automatic-reply as from an indicated date and time.

The data processor 12 includes a first retriever 13 retrieving data stored in the first memory area 21, a second retriever 14 retrieving data stored in the second memory area 22, and a third retriever 15 retrieving data stored in the third memory area 23.

If the unit 11 is set to automatically transmit a reply to an e-mail transmitter in response to a received e-mail, when the cellular phone 30 receives an e-mail, the first retriever 13 retrieves addresses stored in the first memory area 21 with an address of a receive e-mail being used as a key. If the first retriever 13 found an address coincident with the address of a received e-mail, the second retriever 14 retrieves the second memory area 22. If the second retriever 14 found a message or sentences to be mailed, associated with the address having been found by the first retriever 13, the third retriever 15 retrieves the third memory area 23. If the third retriever 15 found image data associated with the address having been found by the first retriever 13, the message having been found by the second retriever 14 and the image data having been found by the third retriever 15 are automatically transmitted to an e-mail transmitter.

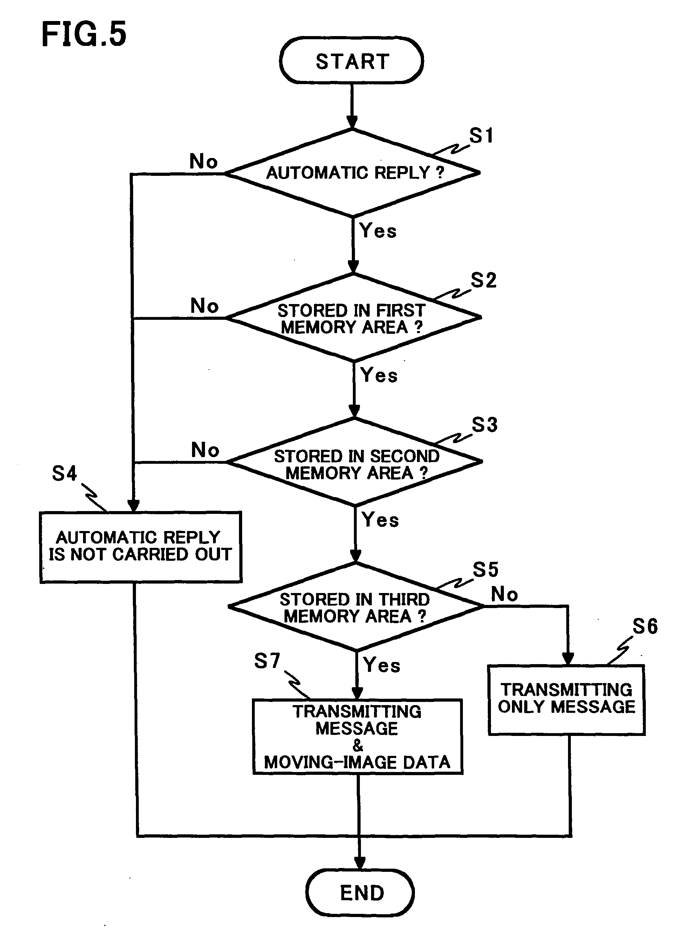

FIG. 5 is a flowchart of an operation of the cellular phone 30. Hereinbelow is explained an operation of the cellular phone 30 with reference to FIG. 5.

When the cellular phone 30 receives and e-mail, the controller 10 checks whether it is determined to automatically transmit a reply to an e-mail transmitter in response to a received e-mail, in step S1.

If not determined (NO in step S1), the automatic-reply is not carried out (step S4).

If determined (YES in step S1), an address of the received e-mail is transmitted to the first retriever 13. Then, the first retriever 13 checks whether the address of the received e-mail is stored in the first memory area 21, in step S2.

If not stored (NO in step S2), the automatic-reply is not carried out (step S4).

If stored (YES in step S2), the first retriever 13 transmits the address of the received e-mail to the second retriever 14. The second retriever 14 checks whether a message or a mail associated with the address is stored in the second memory area 22, in step S3.

If not stored (NO in step S3), the automatic-reply is not carried out (step S4).

If stored (YES in step S3), the second retriever 14 transmits the address of the received e-mail to the third retriever 15. The third retriever 15 checks whether moving-image data associated with the address is stored in the third memory area 23, in step S5.

If not (NO in step S5), only the message or mail having been found by the second retriever 14 out of the second memory area 22 is automatically transmitted to the address of the received e-mail, in step S6.

If stored (YES in step S5), the controller 10 transmits both of the message and the moving-image data to the address of the received e-mail through the radio signal modem 1 and the antenna 23a and 23b, in step S7.

Though the moving-image data is transmitted to the address of the received e-mail in step S7, it should be noted that still-image data may be transmitted in place of moving-image data. Voice data may be transmitted to the address of the received e-mail together with the moving-image or still-image data in step S7.

When the message is not stored in the second memory area 22 (NO in step S3), and hence, the automatic reply is not carried out (step S4), a predetermined message determined as default may be transmitted to the address of the received e-mail so as to let the e-mail transmitter know that a user of the cellular phone 30 safely receives his/her e-mail.

If both of a user of the cellular phone 30 and an e-mail transmitter activate the unit 11 to carry out the automatic reply, it is necessary for at least one of them to inactivate the unit to stop the automatic reply, by checking a history of e-mail transmission or receipt.

Any date and time can be stored in the unit 11. Hence, when the unit 11 is inactivated not to carry out the automatic reply, it is possible to drive the unit 11 to transmit image data to an indicated address at indicated date and time. Thus, any information such as a congratulation message of a birthday may be transmitted to any person.

If the cellular phone 30 is designed to have a function of television-telephone, moving-image data stored in the third memory area 23 may be automatically transmitted in response to a received e-mail, when a user cannot make a reply to a received e-mail.

Though the cellular phone 30 is designed to be a foldable one, the cellular phone 30 may be designed to be a non-foldable one, that is, a box type one.

In the above-mentioned embodiment, the mobile terminal is comprised of a cellular phone. However, it should be noted that the mobile terminal may be comprised of a personal digital assistant (PDA), a mobile phone in accordance with a personal handy phone system (PHS), and the like.

In the above-mentioned embodiment, when the automatic reply is carried out, only a message (step S6) or both of a message and image data (step S7) is automatically transmitted to the address of a received e-mail. As an alternative, only image data may be automatically transmitted to the address of a received e-mail.

A computer program written in a language readable by a computer can accomplish an operation of the controller 10.

For operating the controller 10 by means of a computer program, the controller 10 is designed to include a memory such as the memory 3 to store a computer program therein, for instance. The computer program is stored in the memory, and is read out into the controller 10 when the controller 10 starts its operation. Thus, such an operation of the controller 10 as mentioned above is accomplished in accordance with the computer program.

As an alternative, a recording medium storing such a computer program as mentioned above may be set into the controller 10 to be read out by the controller 10.

The functions of the controller 10 may be accomplished as a program including various commands, and be presented through a recording medium readable by a computer.

In the specification, the term "recording medium" means any medium which can record data therein.

The term "recording medium" includes, for instance, a disk-shaped recorder such as CD-ROM (Compact Disk-ROM) or PD, a magnetic tape, MO (Magneto Optical Disk), DVD-ROM (Digital Video Disk-Read Only Memory), DVD-RAM (Digital Video Disk-Random Access Memory), a floppy disk, a memory chip such as RAM (Random Access Memory) or ROM (Read Only Memory), EPROM (Erasable Programmable Read Only Memory), EEPROM (Electrically Erasable Programmable Read Only Memory), smart media (Registered Trade Mark), a flush memory, a rewritable card-type ROM such as a compact flush card, a hard disk, and any other suitable means for storing a program therein.

A recording medium storing a program for accomplishing the above-mentioned apparatus may be accomplished by programming functions of the above-mentioned apparatuses with a programming language readable by a computer, and recording the program in a recording medium such as mentioned above.

## Claims

1. A method of automatically replying to a received e-mail in a mobile terminal (30) having a function of transmitting and receiving an e-mail, **characterized by** the automatic-reply step of automatically transmitting image data determined in accordance with an address of a transmitter of the received e-mail, to the address.

2. The method as set forth in claim 1, wherein the image data is edited in accordance with the address.

3. The method as set forth in claim 1 or 2, wherein text data determined in accordance with the address is automatically transmitted together with the image data.

4. The method as set forth in any one of claims 1 to 3, further comprising the step of determining whether the image data is automatically transmitted in response to the received e-mail.

5. The method as set forth in any one of claims 1 to 4, wherein the automatic-reply step includes the steps of:
(a) checking whether an address of a transmitter of a received e-mail is stored in a memory (21);
(b) checking whether image data associated with the address is stored in the memory (23); and
(c) transmitting the image data to the address.

6. The method as set forth in claim 5, further comprising the step of (d) judging whether it is determined to automatically transmit image data determined in accordance with the address, to the transmitter, the step (d) being carried out prior to the step (a).

7. The method as set forth in claim 5 or 6, further comprising the steps of (e) checking whether text data associated with the address is stored in the memory (22), wherein the text data is transmitted to the address together with the image data in the step (c).

8. The method as set forth in any one of claims 5 to 7, further comprising the step of (f) editing the image data in accordance with the address.

9. The method as set forth in any one of claims 1 to 8, wherein the image data is comprised of moving-image data.

10. A mobile terminal (30) having functions of transmitting and receiving an e-mail, and automatically replying to a received e-mail, **characterized by** a controller (10) for automatically transmitting image data determined in accordance with an address of a transmitter of the received e-mail.

11. The mobile terminal as set forth in claim 10, wherein the controller (10) edits the image data in accordance with the address.

12. The mobile terminal as set forth in claim 10 or 11, wherein text data determined in accordance with the address is automatically transmitted together with the image data.

13. The mobile terminal as set forth in any one of claims 10 to 12, wherein the mobile terminal is comprised of a cellular phone (30).

14. The mobile terminal as set forth in any one of claims 10 to 13, wherein the controller (10) includes a data processor (12) and a memory (20),
the memory (20) including a first memory area (21) for storing addresses to which an e-mail is automatically transmitted, and a second memory area (23) for storing moving-data to be edited by a user of the mobile terminal for each of the addresses,
the data processor (12) including a first retriever (13) which retrieves the addresses stored in the first memory area (21), and a second retriever (15) which retrieves the moving-data stored in the second memory area (23).

15. The mobile terminal as set forth in claim 14, wherein the memory (20) further includes a third memory area (22) for storing a message to be edited by the user, and the data processor (12) further includes a third retriever (14) which retrieves the message stored in the third memory area (22).

16. The mobile terminal as set forth in any one of claims 10 to 15, wherein the controller (10) includes a unit (11) for determining whether the image data is automatically transmitted in response to the received e-mail.

17. The mobile terminal as set forth in any one of claims 10 to 16, wherein the image data is comprised of moving-image data.

18. A program for causing a computer to carry out a method of automatically replying to a received e-mail in a mobile terminal having a function of transmitting and receiving an e-mail, wherein automatic-reply steps executed by the computer in accordance with the program include automatically transmitting image data determined in accordance with an address of a transmitter of the received e-mail, to the address.

19. The program as set forth in claim 18, wherein the automatic-reply steps include:
(a) checking whether an address of a transmitter of a received e-mail is stored in a memory (21);
(b) checking whether image data associated with the address is stored in the memory (23); and
(c) transmitting the image data to the address.

20. The program as set forth in claim 19, wherein the automatic-reply steps further include (d) judging whether it is determined to automatically transmit image data determined in accordance with the address, to the transmitter, the step (d) being carried out prior to the step (a).

21. The program as set forth in claim 19 or 20, wherein the automatic-reply steps further include (e) checking whether text data associated with the address is stored in the memory, wherein the text data is transmitted to the address together with the image data in the step (c).
